# EUROPEAN PATENT APPLICATION

(11) **EP 2 897 032 A1**
(43) Date of publication of application: **22.07.2015**
(21) Application number: 13836861.8
(22) Date of filing: 14.06.2013
(51) Int. Cl.: G06F 3/0481

(54) **MOBILE TERMINAL-BASED METHOD FOR SIDE-BY-SIDE INPUT OF INFORMATION AND MOBILE TERMINAL**

(30) Priority: 13.09.2012 CN 201210336943
(71) Applicant: Huizhou TCL Mobile Communication Co., Ltd., Huizhou, Guangdong 516006 (CN)
(72) Inventor: WU, Qifeng, Huizhou Guangdong 516006 (CN)
(74) Representative: D'Halleweyn, Nele Veerle Trees Gertrudis
(86) International application number: PCT/CN2013/077222
(87) International publication number: WO 2014/040434

(57) **Abstract**

An information cross-reference inputting method based on a mobile terminal and the mobile terminal are disclosed. The method comprises the following steps of: defining an information region for cross-reference input as a region to be topped, receiving an operation instruction from a user by the mobile terminal to select the region to be topped, and saving the selected region to be topped; topping the region to be topped in a current display interface, and saving data of a region overlaid by the topped region; and receiving an operation instruction from the user by the mobile terminal to drag the topped region so that displaying of the data of the originally overlaid region is recovered. The present disclosure provides mobile terminals with a new function: the user can input information in an interface while referring to this information shown in the same interface. Therefore, it is very convenient for the user to achieve the information cross-reference inputting without having to remember the related content or frequently switch between two windows.

## Description

### FIELD OF THE INVENTION

The present disclosure relates to the technical field of mobile terminals, and more particularly, to an information cross-reference inputting method based on a mobile terminal and the mobile terminal.

### BACKGROUND OF THE INVENTION

With the development of the mobile terminal technologies, the following situation is often encountered by a user during the use of a mobile terminal: the user needs to input a username and a password in a certain application window, but the username and the password are saved in another application window, such as, in an email or a TextEdit file, and the username and the password cannot be copied for pasting. In this situation, the username and the password can be only inputted manually. Solutions to this problem in the prior art include:
The first kind of solution: the user tries to remember the username and the password in advance, and then inputs them in a window in which the information needs to be inputted. This requires the user to have an excellent memory ability or have something available for manually recording the related information. This makes it inconvenient for the user when the information is relatively complex or when nothing is available for manually recording the related information.

The second kind of solution: the user switches between the two windows frequently to see a part of the information in one of the windows and then input the part of the information into the other each time. As switching between windows in a mobile terminal is not so convenient as in a PC, this increases the difficulty in operation.

Accordingly, improvement and advancement still have to be made on the conventional technologies.

### SUMMARY OF THE INVENTION

The technical problem to be solved by the present disclosure is to provide an information cross-reference inputting method based on a mobile terminal and the mobile terminal so as to solve the aforesaid shortcomings of the prior art. When a user input information in a mobile phone, a window can display toppedly a selected region of another window so that the user can input information cross-reference in the window while referring to this information shown in the selected region of the another window that is topped. This is convenient for the user.

To solve the aforesaid technical problem, a technical solution adopted in the present disclosure is to provide an information cross-reference inputting method based on a mobile terminal. The method comprises steps of: A. defining an information region for cross-reference input as a region to be topped, receiving an operation instruction from a user by the mobile terminal to select the region to be topped, and saving the selected region to be topped; B. topping the selected region to be topped in a current display window, and saving data of a region overlaid by the topped region; and C. receiving an operation instruction from the user by the mobile terminal to drag the topped region so that the originally overlaid region in the current display window is recovered into the original region, topping the topped region that has been moved, and meanwhile, saving data of a region overlaid by the topped region that has been moved.

The step A specifically comprises steps of: A1. defining the information region for cross-reference input as the region to be topped; A2. receiving the operation instruction from the user by a touch screen of the mobile terminal to select the region to be topped, and representing coordinates of a point depressed by a finger of the user and a point released by the finger in the form of coordinates x, y; and A3. determining a box region corresponding to the coordinate range in the screen interface as the region to be topped according to the coordinates of the point depressed and the coordinates of the point released, and identifying the selected region to be topped with a different color; A4. saving the selected region to be topped.

The step A4 specifically comprises steps of: A41. recording start positions of the selected region to be topped in an x direction and a y direction respectively, and recording end positions of the selected region to be topped in the x direction and the y direction respectively; A42. calculating a length of the selected region in the x direction and a height of the selected region in the y direction; A43. calculating a size of the selected region to be topped, and assigning a selected region memory space with a corresponding size for the selected region to be topped; and A44. calculating a start displacement of the selected region in an LCD driver buffer to obtain a start address of the selected region in the LCD driver buffer, and saving data of the selected region in the LCD driver buffer into the selected region memory space.

The step B specifically comprises steps of: B1. superimposing the selected region to be topped on the current display window; B2. replacing data of the box region within the coordinate range corresponding to the selected region to be topped in the current display window with the data of the region to be topped that is saved in the selected region memory space so as to complete topping of the selected region to be topped; and B3. saving the data of the region overlaid by the topped region in the current display window.

The step B3 specifically comprises steps of: B31. calculating a start displacement of the region, which is overlaid by the topped region in the current display window, in the LCD driver buffer to obtain a start address of the overlaid region in the current display window in the LCD driver buffer; B32. assigning a backup space with a size corresponding to the region to be topped; and B33. saving the data of the overlaid region in the current display window from the LCD driver buffer into the backup space.

The step C specifically comprises steps of: C1. receiving the operation instruction from the user by the mobile terminal to drag the region to be topped; C2. determining whether contents of the current display window has been updated, and if the answer is no, proceeding to step C3, and otherwise, proceeding to step C4; C3. if no content in the current display window has been updated, recovering the data saved in the backup space into the LCD driver buffer so that displaying of the originally overlaid region in the current display window is recovered, and then proceeding to the step C4; and C4. replacing data of the box region within the coordinate range corresponding to the dragged region to be topped in the current display window with the data of the region to be topped that is saved in the selected region memory space so as to complete topping of the dragged region to be topped.

The step C4 further comprises steps of: C41. calculating start positions and end positions of the region to be topped in the x direction and the y direction after being moved respectively; C42. calculating a start displacement of the region overlaid by the region to be topped that has been moved in the current display window in the LCD driver buffer so as to obtain a start address of the region overlaid by the region to be topped that has been moved in the current display window in the LCD driver buffer; and C43. saving the data of a newly overlaid region in the current display window from the LCD driver buffer into the backup space.

To solve the aforesaid technical problem, another technical solution adopted in the present disclosure is to provide a mobile terminal adopting the information cross-reference inputting method described above. The mobile terminal comprises: a topped-region selecting module, being configured to receive an operation instruction from a user to select an information region for cross-reference input as a region to be topped; a topped-region dragging module, being configured to receive an operation instruction from the user to drag the region to be topped; a topped-region displaying module, being configured to top the region to be topped in the current display window and, after the region to be topped has been dragged, recover displaying of an originally overlaid region in the current display window; and a storage module, being configured to store the data of the region to be topped that is selected by the user and store the data of the region overlaid by the region to be topped in the current display window.

The topped-region displaying module further comprises: a topping unit, being configured to superimpose the region to be topped that is selected by the user on the current display window to top the region to be topped; a determining unit, being configured to determine whether contents of the current display window has been updated; and a display recovering unit, being configured to recover displaying of the originally overlaid region in the current display window if no content of the current display window has been updated.

The storage module further comprises: a first storage unit, being configured to store the data of the region to be topped that is selected by the user; and a second storage unit, being configured to store the data of the region overlaid by the region to be topped in the current display window.

The information cross-reference inputting method based on the mobile terminal and the mobile terminal provided in the present disclosure provide the mobile terminal with a new function: the user can select a region in a certain interface of the mobile terminal, and top the selected region in another interface so that the information can be inputted in a same interface by making cross-reference to this information shown in the same interface. With the method of topping the information content for cross-reference input, it is very convenient for the user who uses the mobile terminal to achieve the information cross-reference inputting without having to take time to remember the related contents or frequently switch between two application windows.

### BRIEF DESCRIPTION OF THE DRAWINGS

FIG. 1 is a flowchart diagram illustrating a preferred embodiment of an information cross-reference inputting method based on a mobile terminal of the present disclosure;
FIG. 2 is a schematic view illustrating selection of a region to be topped by the user in an embodiment of the information cross-reference inputting method based on a mobile terminal of the present disclosure;
FIG. 3 is a block diagram illustrating controlling principles of an LCD in the embodiment of the information cross-reference inputting method based on a mobile terminal of the present disclosure;
FIG. 4 is a schematic view illustrating the step of topping the region to be topped in the embodiment of the information cross-reference inputting method based on a mobile terminal of the present disclosure;
FIG. 5 is a schematic view illustrating the step of dragging and topping the region to be topped in the embodiment of the information cross-reference inputting method based on a mobile terminal of the present disclosure;
FIG. 6 is a block diagram illustrating the structure of a mobile terminal according to a preferred embodiment of the present disclosure;
FIG. 7 is a block diagram illustrating the specific structure of a topped-region displaying module of an mobile terminal according to an embodiment of the present disclosure; and
FIG. 8 is a block diagram illustrating the specific structure of a storage module of a mobile terminal according to an embodiment of the present disclosure.

### DETAILED DESCRIPTION OF THE INVENTION

To make the objectives, technical solutions and advantages of the present disclosure clearer and more apparent, embodiments of the present disclosure will be detailed hereinafter with reference to the accompanying drawings. It shall be understood that, the embodiments described herein are only provided for purpose of illustration rather than to limit the present disclosure.

An information cross-reference inputting method based on a mobile terminal provided in the present disclosure relates to the touch screen and the graphics processing technologies. Implementation of the method of the present disclosure is mainly composed of four steps: selecting a region to be topped by a user via a touch screen of a mobile terminal; saving the selected region to be topped; topping the region to be topped that is saved; and dragging the region to be topped on the screen of the mobile terminal.

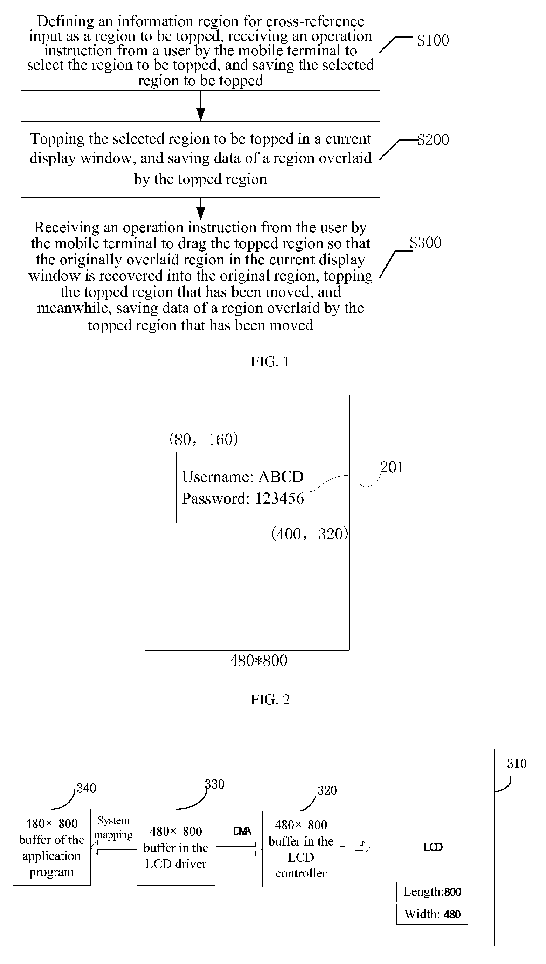

Refer to FIG. 1, which shows a flowchart diagram illustrating a preferred embodiment of an information cross-reference inputting method based on a mobile terminal of the present disclosure. The method comprises following steps:
S100: defining an information region for cross-reference input as a region to be topped, receiving an operation instruction from a user by the mobile terminal to select the region to be topped, and saving the selected region to be topped. In this embodiment, the region to be topped is selected by the user via the touch screen.
S200: topping the selected region to be topped in a current display window, and saving data of a region overlaid by the topped region in the current display window.
S300: receiving an operation instruction from the user by the mobile terminal to drag the topped region so that the originally overlaid region in the current display window is recovered into the original region, topping the topped region that has been moved, and meanwhile, saving data of a region overlaid by the topped region that has been moved in the current display window.

Preferably, in the step S100 of this embodiment, the region to be topped is defined as a box region. The way in which the mobile terminal identifies the operation instruction from the user to determine the region to be topped is as follows: when the user uses his or her finger to select the region to be topped on the screen of the mobile terminal, he or she only needs to slide the finger on the region to be topped so that the mobile terminal can obtain from this operation the coordinates of a point depressed and a point released by the finger of the user. The coordinates obtained are then used as coordinates of two endpoints of a diagonal of the box region to be topped so as to uniquely determine the box region to be topped.

Specifically, both the coordinates of the point depressed and the coordinates of the point released are represented in the form of (x,y). As described, if the coordinates of point depressed are represented as (x1,y1) and the coordinates of the point released are represented as (x2,y2), then a box region corresponding to the coordinate range from the corresponding coordinates (x1,y1) to the corresponding coordinates (x2,y2) in the screen interface is determined as the region to be topped that is selected by the user and the selected region to be topped is labeled with a different color. As shown in FIG. 2, on a screen with a size of 400 X 800, the coordinates of the point depressed and the point released of the region to be topped that is selected by the user are (80, 160) and (400, 320) respectively. According to the coordinates of the point depressed and the point released, a box region 201 in FIG. 2 can be uniquely determined as the selected region to be topped.

After the region to be topped is determined, the selected region to be topped needs to be saved. Hereinbelow, the principles of display controlling of an LCD will be simply described to provide a better understanding of the present disclosure. The image data shown on the screen of the mobile terminal is usually saved in a buffer of an LCD controller, and a buffer of the same size as the buffer of the LCD controller is also assigned in an LCD driver to correspond to the buffer of the LCD controller so that what buffered in the LCD driver is updated into the buffer of the LCD controller timely through DMA (Direct Memory Access). Meanwhile, the buffer in the LCD driver will be mapped to a user space of an application program through a system call by the LCD driver so that the buffer in the LCD driver can be operated by the application program.

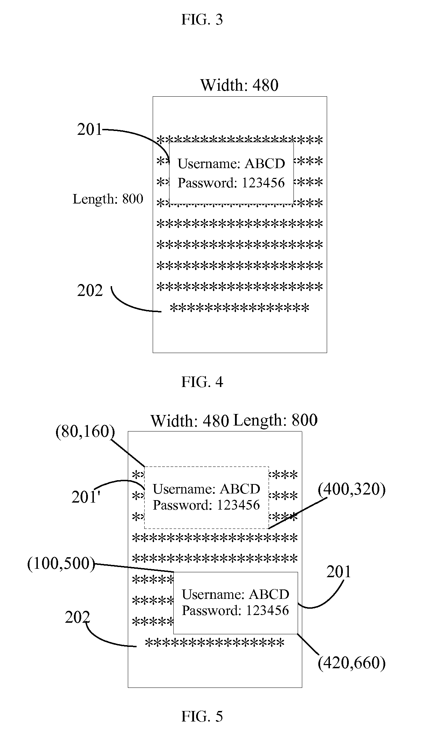

Specifically, the application program can, in the user space of the application program, directly operate a buffer region of a size corresponding to that of the actual LCD as shown in FIG. 3. If the size of the actual LCD screen 310 is 480 × 800, the LCD controller and the LCD driver will correspondingly have a buffer 320 and a buffer 330 both having a size of 480 X 800 respectively, and the user space of the application program will also have a buffer 340 having a size of 480 X 800 correspondingly. Therefore, all operations performed on the buffer 340 in the user space by the application program will all be reflected in an image displayed on the actual LCD screen 310.

As can be known from the above principles of display controlling of the LCD, there is a buffer 340 in the user space of the application program that corresponds to the actual LCD screen 310. Here, the buffer refers to the buffer in the user space of the application program, and the image data in the buffer 340 is in one-to-one correspondence with the image displayed on the actual LCD screen. Therefore, when the region to be topped that is selected by the user is to be saved, it is only necessary to obtain from the LCD screen 130 the region to be topped that is selected by the user, and then save data of the corresponding region of the buffer in the user space of the application program (i.e., to save the region to be topped that is selected by the user on the LCD screen). Accordingly, the way in which the selected region to be topped is saved in the step S100 of this embodiment is as follows:
Step 1: recording start positions (x1,y1) of the selected region to be topped in an x direction and a y direction respectively, and recording end positions (x2,y2) of the selected region to be topped in the x direction and the y direction respectively.
Step 2: calculating a length of the selected region to be topped in the x direction and a width of the selected region in the y direction. Specifically, the length in the x direction is x2-x1 and the width in the y direction is y2-y1.
Step 3. calculating a size of the selected region to be topped, and assigning a selected region memory space of a corresponding size for the selected region to be topped. In this embodiment, the size of the selected region to be topped is (x2-x1)x(y2-y1), and correspondingly, the memory space size of the selected region that is assigned is also (x2-x1)x(y2-y1).
Step 4. calculating a start displacement of the selected region in an LCD driver buffer to obtain a start address of the selected region in the LCD driver buffer, and saving data of the corresponding region in the LCD driver buffer into the selected region memory space.

Preferably, the step of saving the selected region to be topped can be achieved through the codes below:
x_start = 80; // start position of the selected region in the x direction
y_start = 160; // start position of the selected region in the y direction
x_end = 400; // end position of the selected region in the x direction
y_end = 320; // end position of the selected region in the y direction
select_length = x_end - x_start; // calculating a length of the selected region in the x direction
select_height = y_end - y_start; // calculating a width of the selected region in the y direction
select_size = select_length * select_height; // calculating a size of the selected region
select_address = (int *)malloc(select_size); // assigning a memory space of a corresponding size to the selected region
lcd_select_start = x_start + y_start*480; // calculating a start displacement of the selected region in the LCD driver buffer
lcd_address_select = lcd_address + lcd_select_start; // obtaining a start address of the selected region in the LCD driver buffer
memcpy(select_address, lcd_address_select, select_size); // saving data of the selected region in the LCD driver buffer into the selected region memory.

After the region to be topped that is selected by the user is saved, the user can top the saved region to be topped in other operation windows of the mobile terminal. The topping refers to that: the region to be topped will be shown at the topmost of a current window regardless of the current window so as to ensure that the content information of the region to be topped can be seen by the user at any time. In an embodiment of the present disclosure, a schematic view illustrating the step of topping the region to be topped is as is shown in FIG. 4, where a box region 201 containing information of a username and a password is the region to be topped and a current window 202 is shown behind the topped region 201.

Preferably, in this embodiment, the way to top the selected region to be topped in the step S200 is as follows:
Firstly, superimposing the saved region to be topped on the current display window.
Secondly, replacing data of the box region within the coordinate range corresponding to the region to be topped in the current display window with the data of the region to be topped. This is reflected on the LCD screen by that the region to be topped is topped in the current display picture.

Finally, saving the data of the region overlaid by the topped region in the current display window so that displaying of the overlaid region can be recovered on the LCD screen after the topped region is closed or dragged.

Preferably, the step of topping the region to be topped can be achieved through the codes below:
lcd_replace_start = x_start + y_start*480; // calculating a start displacement of the overlaid region in the current display window in the LCD driver buffer
lcd_address_replace = lcd_address + lcd_replace_start; // obtaining a start address of the overlaid region in the current display window in the LCD driver buffer
memcpy(lcd_address_replace, select_address, select_size); // replacing the data of the overlaid region in the current display window in the LCD driver buffer with the data of the selected region that is saved before
lcd_backup_start = x_start + y_start*480; // calculating a start displacement of the region to be saved (i.e., the overlaid region) in the current display window in the LCD driver buffer
lcd_address_backup = lcd_address + lcd_backup_start; // obtaining a start address of the region to be saved in the LCD driver buffer
backup_address = (int *)malloc(select_size); // assigning a backup space of a size corresponding to the selected region because the size of the overlaid region is the same as that of the selected region
memcpy(backup _address, lcd_address_backup, select_size); // copying the data of the overlaid region in the current display window in the LCD driver buffer into the backup space for saving.

Further in this embodiment, the way to save the data of the region overlaid by the topped region in the current display window is as follows.

Firstly, a start displacement of the region, which is overlaid by the topped region in the current display window, in the LCD driver buffer is calculated; a start address of the overlaid region in the current display window in the LCD driver buffer is obtained; and then, because the size of the overlaid region is the same as that of the region to be topped, a backup space of a size corresponding to the region to be topped is assigned to save the data of the overlaid region in the current display window.

Further, in a process of inputting information by making cross reference to the topped region, the user might also need to adjust the position of the topped region on the screen to make it easy for the user to input information in the current display window. In an embodiment of the present disclosure, the user can also drag the topped region, that is, the step S300 can be implemented as follows:
Step 1: receiving an operation instruction from the user by the mobile terminal to drag the topped region.
Step 2: determining by the mobile terminal in real time whether a content 202 of the current display window has been updated. For example, when the current display window is a webpage, the content thereof might be updated with time. Therefore, it is also required to determine whether the content of the current display window has been updated when the topped region is dragged.
Step 3: if the content of the current display window has not been updated, it is required to recover displaying of the originally overlaid region in the current display window, that is, recovering the data of the overlaid region in the current display window that is saved before in the backup space into the LCD driver buffer so that displaying of the originally overlaid region in the current display window is recovered into the original region. As shown in FIG. 5, a start address of a topped region 201' is (80,160) and an end address thereof is (400,320) before the topped region is dragged by the user. If it is determined that the content of the current display window 202 has not been updated when the topped window is dragged, the data saved in the backup space needs to be copied into a box region uniquely determined by the start coordinates (80,160) and the end coordinates (400,320) in the LCD driver buffer so that displaying of the region can be recovered. However, if the content of the current display window has been updated, it will be unnecessary use the data of the overlaid region in the current display window that is originally saved, and instead, the region to be topped that has been moved can be directly superimposed on the updated data in the LCD driver buffer for display.
Step 4: replacing data of the box region within the coordinate range corresponding to the topped region that has been moved in the current display window with the data of the topped region. This is reflected on the LCD by that the region to be topped that has been moved is topped in the current display window. In this embodiment, a start address of the region to be topped 201 that has been dragged is (100,500) and an end address thereof is (420,660); that is, the data of the box region uniquely determined by the coordinates (100,500) and (420,660) in the current LCD driver buffer needs to be saved into the backup space, and the data in the box region is replaced with the data of the region to be topped so as to be displayed on the LCD display screen.

Preferably in this embodiment, the step of topping the topped region after being dragged can be implemented as follows.

Firstly, calculating start positions (x1',y1') and end positions (x2',y2') of the region to be topped in the x direction and the y direction respectively after being dragged.

Secondly, calculating a start displacement of the region overlaid by the topped region, which has been dragged, in the LCD driver buffer in the current display window according to the coordinates (x1',y1'), and re-calculating a start address of the overlaid region in the current display window.

Finally, obtaining a newly-overlaid region in the current display window in the LCD driver buffer according to the start address that is re-calculated, and saving data of the newly-overlaid region in the current display window from the LCD driver buffer into the backup space to overwrite the data saved before.

Preferably, the step of dragging and topping the topped region can be achieved through the codes below when the content displayed in the current window has not been updated:
x_start_new = 100; // start position of the topped region in the x direction after being moved
y_start_new = 500; // start position of the topped region in the y direction after being moved
x_end_new = 420; // end position of the topped region in the x direction after being moved
y_end_new = 660; // end position of the topped region in the y direction after being moved
memcpy(lcd_address_backup, backup _ address, select_size); // recovering data of the overlaid region that is saved before into the LCD driver buffer
lcd_replace_start_new = x_start_new + y_start_new*480; // calculating a start displacement of the region newly-overlaid by the topped region that has been moved in the LCD driver buffer
lcd_address_replace_new = lcd_address + lcd_replace_start; // obtaining a start address of the region newly-overlaid by the topped region that has been moved in the LCD driver buffer
memcpy(lcd_address_replace_new, select_ address, select_size); // replacing the data of the newly-laid region in the LCD driver buffer with the data of the topped region that is saved before. Because the topped region changes only in position but not in size, there is no need to re-calculate the size thereof.
lcd_backup_start = x_start_new + y_start_new*480; // calculating a start displacement of a new region to be saved (i.e., a newly-overlaid region) in the current display window in the LCD driver buffer
lcd_address_backup = lcd_address + lcd_backup_start; // obtaining a start address of the new region to be saved in the LCD driver buffer
memcpy(backup_address, lcd_address_backup, select_size); // copying the data of the newly-overlaid region in the current display window from the LCD driver buffer into the backup space for saving.

Preferably in this embodiment, the way to determine whether any content in the current display window has been updated is as follows: because when the application program updates the data of the buffer in the LCD driver (i.e., the current display window), a related function interface for updating the buffer in the LCD driver will be necessarily called, all that needs to be done is to set an update flag bit in the related function for updating the buffer in the LCD driver. The value of the flag bit is initialized to be "false". When the function is called, the value of the flag bit is set to be "true"; and after the region to be topped has replaced the corresponding region in the LCD driver buffer, the value of the flag bit is re-set to be "false". Therefore, by detecting the update flag bit, whether or not the function for updating the buffer in the LCD driver has been called can be known, and thus whether or not the current display window has been updated can be determined. Specifically, this can be achieved through the codes below:

```
    int lcd_update() // a function for updating the buffer in the LCD driver
     {
         is_lcd_updated = true; // if the function is called,
the update flag bit is set to be "true"
     }
    int lcd_replace() // a function for replacing the data of the corresponding region in the
    current display window in the LCD driver buffer
     {
         is_lcd_updated = true; // if the data of the corresponding region in the current display
         window in the LCD driver buffer has been replaced
 with the topped region, the update flag bit is
         set to be "false"
     }
```

As can be known from the information cross-reference inputting method based on a mobile terminal described in the above embodiments, the method described in the present disclosure has provided mobile terminals with a new function. That is, the user can select a region in a window and top the selected region in other windows so that it is convenient for the user to input information in a current display window by making cross-reference to the information in the topped region. Because it is unnecessary for the user to switch between windows or to remember the related information, this is convenient for the user.

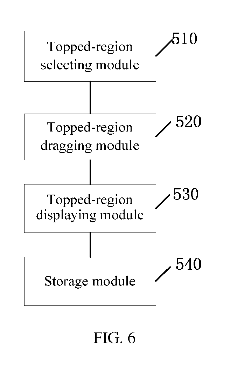

On the basis of the information cross-reference inputting method based on a mobile terminal described in the above embodiments, the present disclosure also provides a mobile terminal. As shown in FIG. 6, the mobile terminal comprises:
a topped-region selecting module 510, being configured to receive an operation instruction from the user to select the information region for cross-reference input as the region to be topped; and having features as described in the above embodiments;
a topped-region dragging module 520, being configured to receive an operation instruction from the user to drag the region to be topped; and having features as described in the above embodiments;
a topped-region displaying module 530, being configured to top the region to be topped in the current display window and, after the region to be topped has been dragged, recover displaying of the originally overlaid region in the current display window; and having features as described in the above embodiments; and
a storage module 540, being configured to store the data of the region to be topped that is selected by the user and store the data of the region overlaid by the region to be topped in the current display window; and having features as described in the above embodiments.

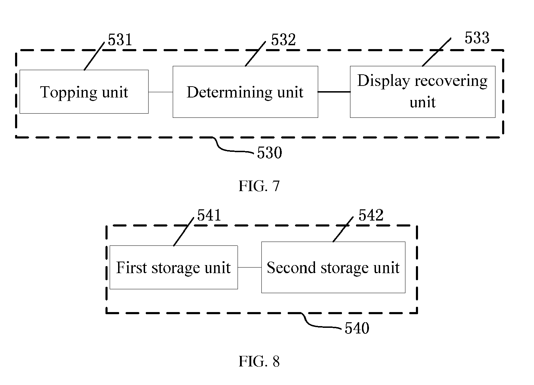

Preferably, as shown in FIG. 7, the topped-region displaying module 530 further comprises:
a topping unit 531, being configured to superimpose the region to be topped that is selected by the user on the current display window to top the region to be topped;
a determining unit 532, being configured to determine whether any content in the current display window has been updated; and
a display recovering unit 533, being configured to recover displaying of the originally overlaid region in the current display window if no content in the current display window has been updated.

Preferably, as shown in FIG. 8, the storage module 540 further comprises:
a first storage unit 541, being configured to store the data of the region to be topped that is selected by the user; and
a second storage unit 542, being configured to store the data of the region overlaid by the region to be topped in the current display window.

## Claims

1. An information cross-reference inputting method based on a mobile terminal, comprising steps of:
A. defining an information region for cross-reference input as a region to be topped, receiving an operation instruction from a user by the mobile terminal to select the region to be topped, and saving the selected region to be topped;
B. topping the selected region to be topped in a current display window, and saving data of a region overlaid by the topped region; and
C. receiving an operation instruction from the user by the mobile terminal to drag the topped region so that the originally overlaid region in the current display window is recovered into the original region, topping the topped region that has been moved, and meanwhile, saving data of a region overlaid by the topped region that has been moved.

2. The information cross-reference inputting method based on the mobile terminal of claim 1, wherein the step A specifically comprises steps of:
A1. defining the information region for cross-reference input as the region to be topped;
A2. receiving the operation instruction from the user by a touch screen of the mobile terminal to select the region to be topped, and representing coordinates of a point depressed by a finger of the user and a point released by the finger in the form of coordinates x, y;
A3. determining a box region corresponding to the coordinate range in a screen interface as the region to be topped according to the coordinates of the point depressed and the coordinates of the point released, and identifying the selected region to be topped with a different color; and
A4. saving the selected region to be topped.

3. The information cross-reference inputting method based on the mobile terminal of claim 2, wherein the step A4 specifically comprises steps of:
A41. recording start positions of the selected region to be topped in an x direction and a y direction respectively, and recording end positions of the selected region to be topped in the x direction and the y direction respectively;
A42. calculating a length of the selected region in the x direction and a height of the selected region in the y direction;
A43. calculating a size of the selected region to be topped, and assigning a selected region memory space with a corresponding size for the selected region to be topped; and
A44. calculating a start displacement of the selected region in an LCD driver buffer to obtain a start address of the selected region in the LCD driver buffer, and saving data of the selected region in the LCD driver buffer into the selected region memory space.

4. The information cross-reference inputting method based on the mobile terminal of claim 3, wherein the step B specifically comprises steps of:
B1. superimposing the selected region to be topped on the current display window;
B2. replacing data of the box region within the coordinate range corresponding to the selected region to be topped in the current display window with the data of the region to be topped that is saved in the selected region memory space, so as to complete topping of the selected region to be topped; and
B3. saving the data of the region overlaid by the topped region in the current display window.

5. The information cross-reference inputting method based on the mobile terminal of claim 4, wherein the step B3 specifically comprises steps of:
B31. calculating a start displacement of the region, which is overlaid by the topped region in the current display window, in the LCD driver buffer to obtain a start address of the overlaid region in the current display window in the LCD driver buffer;
B32. assigning a backup space with a size corresponding to the region to be topped; and
B33. saving the data of the overlaid region in the current display window from the LCD driver buffer into the backup space.

6. The information cross-reference inputting method based on the mobile terminal of claim 5, wherein the step C specifically comprises steps of:
C1. receiving the operation instruction from the user by the mobile terminal to drag the region to be topped;
C2. determining whether contents of the current display window has been updated, and if the answer is no, proceeding to step C3, and otherwise, proceeding to step C4;
C3. if no content in the current display window has been updated, recovering the data saved in the backup space into the LCD driver buffer so that displaying of the originally overlaid region in the current display window is recovered, and then proceeding to the step C4; and
C4. replacing data of the box region within the coordinate range corresponding to the dragged region to be topped in the current display window with the data of the region to be topped that is saved in the selected region memory space, so as to complete topping of the dragged region to be topped.

7. The information cross-reference inputting method based on the mobile terminal of claim 6, wherein the step C4 further comprises steps of:
C41. calculating start positions and end positions of the region to be topped in the x direction and the y direction after being moved respectively;
C42. calculating a start displacement of the region overlaid by the region to be topped that has been moved in the current display window in the LCD driver buffer so as to obtain a start address of the region overlaid by the region to be topped that has been moved in the current display window in the LCD driver buffer; and
C43. saving the data of a newly overlaid region in the current display window from the LCD driver buffer into the backup space.

8. A mobile terminal adopting the information cross-reference inputting method of any of claims 1∼7, comprising:
a topped-region selecting module, being configured to receive an operation instruction from a user to select an information region for cross-reference input as a region to be topped;
a topped-region dragging module, being configured to receive an operation instruction from the user to drag the region to be topped;
a topped-region displaying module, being configured to top the region to be topped in the current display window and, after the region to be topped has been dragged, recover displaying of an originally overlaid region in the current display window; and
a storage module, being configured to store the data of the region to be topped that is selected by the user and store the data of the region overlaid by the region to be topped in the current display window.

9. The mobile terminal of claim 8, wherein the topped-region displaying module further comprises:
a topping unit, being configured to superimpose the region to be topped that is selected by the user on the current display window to top the region to be topped;
a determining unit, being configured to determine whether contents of the current display window has been updated; and
a display recovering unit, being configured to recover displaying of the originally overlaid region in the current display window if no content of the current display window has been updated.

10. The mobile terminal of claim 8, wherein the storage module further comprises:
a first storage unit, being configured to store the data of the region to be topped that is selected by the user; and
a second storage unit, being configured to store the data of the region overlaid by the region to be topped in the current display window.
